# EUROPÄISCHE PATENTSCHRIFT

(11) **EP 0 815 710 B1**
(45) Veröffentlichungstag und Bekanntmachung des Hinweises auf die Patenterteilung: **14.07.1999**
(21) Anmeldenummer: 96904094.8
(22) Anmeldetag: 01.03.1996
(51) Int. Cl.: H05K 7/14

(54) **SCHALTSCHRANK MIT EINEM RAHMENGESTELL**
SWITCHGEAR CABINET WITH A FRAMEWORK
ARMOIRE DE DISTRIBUTION AVEC CHASSIS

(30) Priorität: 07.03.1995 DE 19507738
(43) Veröffentlichungstag der Anmeldung: 07.01.1998
(73) Patentinhaber: Rittal-Werk Rudolf Loh GmbH & Co. KG, 35745 Herborn (DE)
(72) Erfinder: NICOLAI, Walter, D-35418 Buseck (DE)
(74) Vertreter: Fleck, Hermann-Josef, Dr.-Ing.
(86) Internationale Anmeldenummer: EP9600875
(87) Internationale Veröffentlichungsnummer: WO9628004

(56) Entgegenhaltungen:
- DE-A- 1 665 621
- DE-B- 1 209 624
- FR-A- 1 372 458
- GB-A- 664 070
- GB-A- 812 854
- GB-A- 942 434

## Beschreibung

Die Erfindung betrifft einen Schaltschrank mit einem aus Rahmenschenkeln zusammengesetzten Rahmengestell, das mittels Wandelementen und mindestens einer Schranktür verschlossen oder verschließbar ist.

Bei derartigen Schaltschränken werden die Einbauten, wie Montageplatten, Baugruppenträger und dgl. fest in das Rahmengestell eingebaut. Diese starren Verbindungen führen bei Erdbeben dazu, daß durch die in unterschiedlichen Richtungen auftretenden Schub- und Zugkräfte Beschädigungen und Zerstörungen auftreten, die zu vollem Funktionsausfall führen können.

Es ist Aufgabe der Erfindung, einen Schaltschrank der eingangs erwähnten Art zu schaffen, bei dem die Einbauten erdbebensicher untergebracht und vor Beschädigungen weitgehend geschützt sind.

Diese Aufgabe wird nach der Erfindung dadurch gelöst, daß in das Rahmengestell mindestens ein Einbaugehäuse oder Einbaurahmengestell eingebaut ist, das im unteren Bereich mittels vertikal ausgerichteter Dämpfungspuffer federnd auf horizontalen Tragschienen befestigt ist, die zwischen die seitlichen, vertikalen Rahmenschenkel eingebracht sind, und daß der obere Bereich des Einbaugehäuses oder Einbaurahmengestelles mittels horizontal ausgerichteter Dämpfungspuffer direkt oder über Befestigungswinkel federnd mit den vertikalen Rahmenschenkeln des Rahmengestelles verbunden ist.

Mit diesem federnden Einbau werden die auf den Schaltschrank einwirkenden Schub- und Zugkräfte von dem Einbaugehäuse oder Einbaurahmengestell ferngehalten, da die vertikal und horizontal ausgerichteten Dämpfungspuffer allseitig eine begrenzte Auslenkung und damit Verstellung des Einbaugehäuses oder Einbaurahmengestelles gegenüber dem Rahmengestell und damit dem eigentlichen Schaltschrank zulassen. Die im Einbaugehäuse oder Einbaurahmengestell untergebrachten Einbauten sind daher gegenüber den bei einem Erdbeben auftretenden Kräften geschützt.

Das Einbaugehäuse oder Einbaurahmengestell wird nach einer Ausgestaltung dadurch eindeutig vertikal ausgerichtet von den Tragschienen getragen, daß das Einbaugehäuse oder Einbaurahmengestell im unteren Bereich über vier in den Eckbereichen der Unterseite angeordnete Dämpfungspuffer mit den horizontalen Tragschienen verbunden ist.

Der obere Bereich des Einbaugehäuses oder Einbaurahmengestelles wird dadurch ohne zusätzliche Verbindungsschienen federnd abgestützt, daß die Vorder- und die Rückseite des Einbaugehäuses oder Einbaurahmengestelles im oberen Bereich über jeweils zwei senkrecht zu diesen Seiten stehende Dämpfungspuffer mit den zugekehrten vertikalen Rahmenschenkeln verbunden ist.

Ist nach einer Ausgestaltung vorgesehen, daß die Dämpfungspuffer zylinderförmig ausgebildet sind, und daß in die Stirnseiten der Dämpfungspuffer Gewindebuchsen für Befestigungsschrauben eingesetzt sind, dann bilden die Dämpfungspuffer stirnseitig getrennte Befestigungsstellen ohne die Dämpfungsfunktion zu beeinträchtigen.

Die Einbauten in dem Einbaugehäuse lassen sich dadurch leicht HF-dicht unterbringen, wenn vorgesehen ist, daß das Einbaugehäuse bis auf die Vorderseite HF-dicht geschlossen ist.

Ist nach einer weiteren Ausgestaltung vorgesehen, daß das Einbaurahmengestell wie das Rahmengestell mit Reihen von Befestigungsaufnahmen und/oder Befestigungsbohrungen versehen ist, dann können für das Einbaurahmengestell dieselben Befestigungsmittel, Montageschienen und dgl. wie für das Rahmengestell des Schaltschrankes verwendet werden. Dasselbe gilt auch für das Einbaugehäuse, wenn dabei vorgesehen ist, daß das Einbaugehäuse zumindest im Bereich der Vorderseite rahmenartig abgekantet und mit Reihen von Befestigungsaufnahmen versehen ist.

Die Erdbebensicherheit des Schaltschrankes läßt sich dadurch noch verbessern, daß das Rahmengestell über einen plattenförmigen Dämpfungsrahmen federnd auf einem mit der Standfläche verbindbaren Sockel verbunden ist. Der Schaltschrank kann sich gegenüber dem Sockel allseitig begrenzt verstellen, wobei der plattenförmige Dämpfungsrahmen auftretende Kräfte abfangen und schon vom Schaltschrank fernhalten kann.

Die Erfindung wird anhand eines in den Zeichnungen dargestellten Ausführungsbeispiels näher erläutert. Es zeigen:
- Fig. 1: in perspektivischer Ansicht einen Schaltschrank mit Rahmengestell, jedoch abgenommener Schranktür, aber mit einem eingesetzten Einbaugehäuse,
- Fig. 2: in Explosionsdarstellung die Teile für die vertikale, federnde Befestigung des unteren Bereiches des Einbaugehäuses und
- Fig. 3: in Explosionsdarstellung die Teile für die horizontale, federnde Befestigung des oberen Bereiches des Einbaugehäuses in dem Rahmengestell des Schaltschrankes.

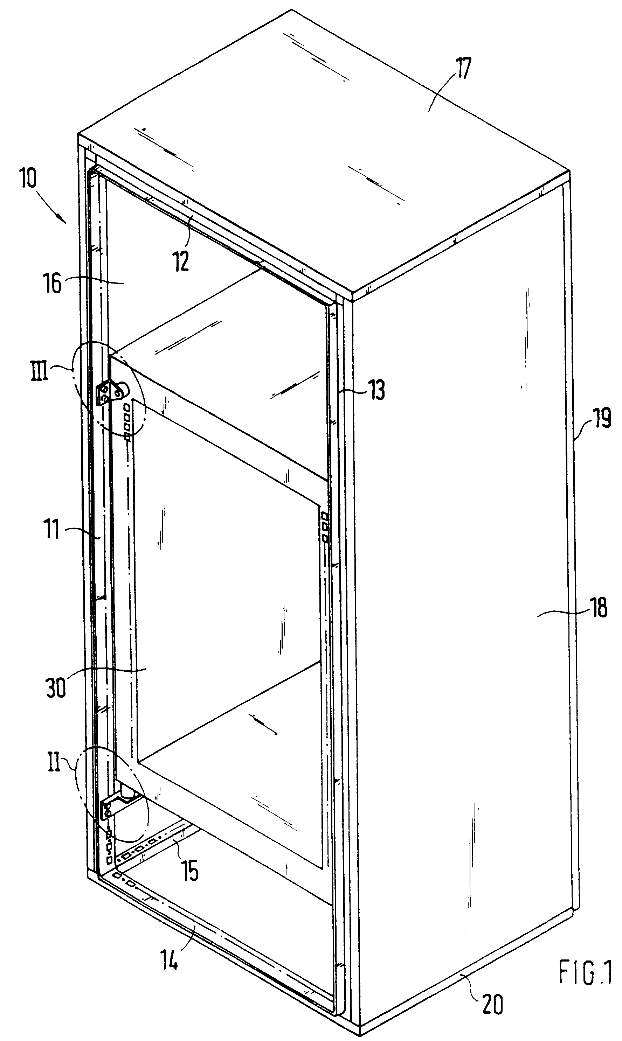

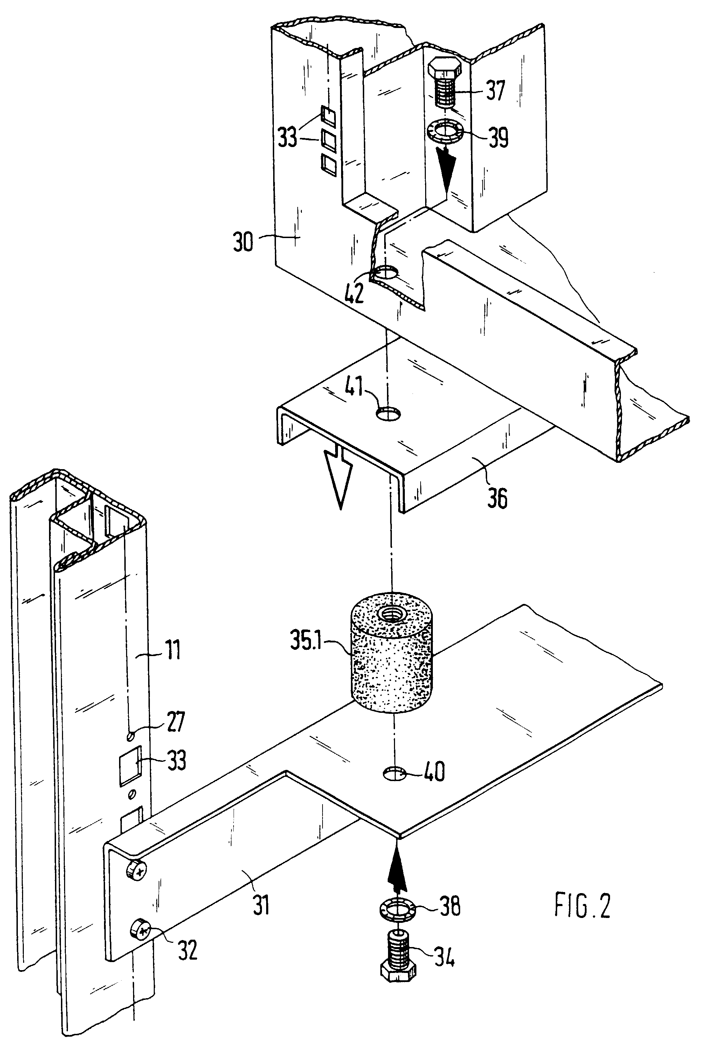

Von dem Rahmengestell 10 des Schaltschrankes sind in Fig. 1 nur die vertikalen Rahmenschenkel 11 und 13 und die horizontalen Rahmenschenkel 12 und 14 sowie die Tiefenstrebe 15 zu erkennen. Die Rahmenschenkel können fest miteinander vebunden, z.B. verschweißt sein. Sie können aber auch mittels Eckverbinder miteinander verbunden sein. Wandelemente 16, 17, 18 und 19 verschließen das Rahmengestell 10 bis auf die Vorder- und Bodenseite. Die Vorderseite wird mittels einer (nicht dargestellten) Schranktür verschlossen. Ein Teil der Rahmenschenkel kann auch an den Wandelementen 16 bis 19 abgekantet sein. Dabei sind in die Rahmenschenkel Reihen von Befestigungsaufnahmen 33 und/oder Befestigungsbohrungen 27 eingebracht, wie in Fig. 2 an dem vertikalen Rahmenschenkel 11 zu erkennen ist.

Die untere Befestigungsstelle II ist in Fig. 2 in Explosionsdarstellung wiedergegeben. Dabei werden zu beiden Seiten zwischen den vorderen und den hinteren, vertikalen Rahmenschenkel, wie z.B. 11, Tragschienen 31 eingesetzt, die mit Befestigungsschrauben 32 an den Rahmenschenkeln befestigt werden. Auf dem horizontalen Schenkel der Tragschienen 31 werden mittels Befestigungsschrauben 34 und Unterlegscheiben 38 Dämpfungspuffer 35.1 vertikal ausgerichtet befestigt, wobei in die Stirnseiten der zylindrischen Dämpfungspuffer 35.1 Gewindebuchsen eingesetzt sind. Damit sind stirnseitige Befestigungsmöglichkeiten an den Dämpfungspuffern 35.1 geschaffen, ohne die allseitige Dämpfungsfunktion zu beeinträchtigen. Die Bohrungen 40 für die Befestigungsschrauben 34 in den Tragschienen 31 sind so eingebracht, daß das Einbaugehäuse 30 an allen vier Ecken unterseitig federnd abgestützt sind. Das Einbaugehäuse 30 wird mittels Befestigungsschrauben 37 und Unterlegscheiben 39 an den Oberseiten der Dämpfungspuffer 35.1 befestigt, wobei die Befestigungsschrauben 37 durch Bohrungen 42 des Einbaugehäuses 30 und Bohrungen 41 von Zwischenschienen 36 eingeführt weden. Das Einbaugehäuse 30 kann zumindest im Bereich der offenen Vorderseite Reihen von Befestigungsaufnahmen 33 und/oder Befestigungsbohrungen tragen, so wie die Rahmenschenkel des Rahmengestelles 10. Anstelle eines geschlossenen Einbaugehäuses 30 kann in gleicher Weise auch ein Einbaurahmengestell in das Rahmengestell 10 federnd abgestützt eingebaut werden.

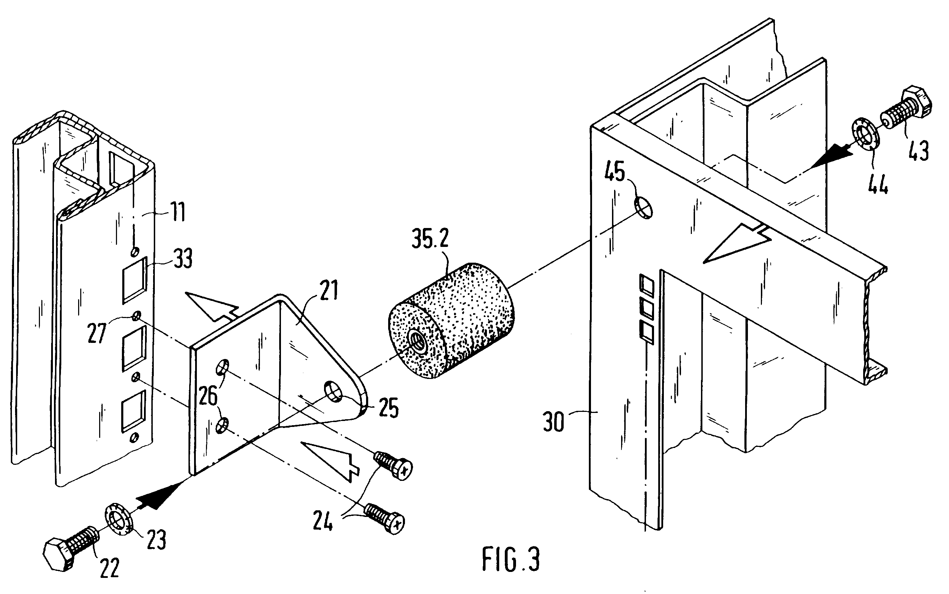

Wie Fig. 3 zeigt, wird der obere Bereich des Einbaugehäuses 30 oder Einbaurahmengestelles mittels horizontal ausgerichteter Dämpfungspuffer 35.2 federnd befestigt. An den zugekehrten vertikalen Rahmenschenkeln, z.B. 11, sind Befestigungswinkel 21 befestigt, wobei Befestigungsschrauben 24 durch Bohrungen 26 des Befestigungswinkels 21 in Befestigungsbohrungen 27 des Rahmenschenkels 11 eingeschraubt werden. Am anderen Schenkel des Befestigungswinkels 21 wird mittels der Befestigungsschraube 22 und einer Unterlegscheibe 23 der Dämpfungspuffer 35.2 befestigt, während die Befestigungsschraube 43 über die Unterlegscheibe 44 und die Bohrung 45 des Einbaugehäuses 30 hindurch mit der anderen Stirnseite des Dämpfungspuffers 35.2 verbunden wird.

Mit Hilfe von jeweils zwei Dämpfungspuffern 35.2 wird die Vorderseite des Einbaugehäuses 30 an den vorderen, vertikalen Rahmenschenkeln und die Rückseite des Einbaugehäuses 30 an den hinteren, vertikalen Rahmenschenkel des Rahmengestelles 10 federnd befestigt. Ragt das Einbaugehäuse 30 zwischen die seitlichen, vertikalen Rahmenschenkel, dann kann die Befestigung über die Dämpfungspuffer 35.2 direkt an den Rahmenschenkeln erfolgen. Bei entsprechender Dimensionierung können auch die Seiten des Einbaugehäusese 30 horizontal abgefedert an den Rahmenschenkeln befestigt werden, wobei die Dämpfungspuffer 35.2 parallel zur offenen Vorderseite des Schaltschrankes ausgerichtet sind.

Mit der vierfachen federnden unteren und oberen Abstützung des Einbaugehäuses 30 am Rahmengestell 10 wird ein erdbebensicherer Einbau erreicht, der noch dadurch verbessert werden kann, daß das Rahmengestell 10 über einen plattenförmigen Dämpfungsrahmen mit dem rahmenartigen Sockel des Schaltschrankes verbunden wird. Der Sockel wird fest mit der Standfläche verbunden. Der Dämpfungsrahmen entkoppelt den Sockel und den Schaltschrank, so daß in diesem Übergangsbereich ebenfalls Kräfte abgefangen und vom Rahmengestell 10 ferngehalten werden.

## Patentansprüche

1. Schaltschrank mit einem aus Rahmenschenkeln zusammengesetzten Rahmengestell, das mittels Wandelementen und mindestens einer Schranktür verschlossen oder verschließbar ist,
dadurch gekennzeichnet,
daß in das Rahmengestell (10) mindestens ein Einbaugehäuse (30) oder Einbaurahmengestell eingebaut ist, das im unteren Bereich mittels vertikal ausgerichteter Dämpfungspuffer (35.1) federnd auf horizontalen Tragschienen (31) befestigt ist, die zwischen die seitlichen, vertikalen Rahmenschenkel (11) eingebracht sind, und
daß der obere Bereich des Einbaugehäuses (30) oder Einbaurahmengestelles mittels horizontal ausgerichteter Dämpfungspuffer (35.2) direkt oder über Befestigungswinkel (21) federnd mit den vertikalen Rahmenschenkeln (11) des Rahmengestelles (10) verbunden ist.

2. Schaltschrank nach Anspruch 1,
dadurch gekennzeichnet,
daß das Einbaugehäuse (30) oder Einbaurahmengestell im unteren Bereich über vier in den Eckbereichen der Unterseite angeordnete Dämpfungspuffer (35.1) mit den horizontalen Tragschienen (31) verbunden ist.

3. Schaltschrank nach Anspruch 1 oder 2,
dadurch gekennzeichnet,
daß die Vorder- und die Rückseite des Einbaugehäuses (30) oder Einbaurahmengestelles im oberen Bereich über jeweils zwei senkrecht zu diesen Seiten stehende Dämpfungspuffer (35.2) mit den zugekehrten vertikalen Rahmenschenkeln (11) verbunden ist.

4. Schaltschrank nach einem der Ansprüche 1 bis 3,
dadurch gekennzeichnet,
daß die Dämpfungspuffer (35.1, 35.2) zylinderförmig ausgebildet sind, und daß in die Stirnseiten der Dämpfungspuffer (35.1, 35.2) Gewindebuchsen für Befestigungsschrauben (22,34, 37,43) eingesetzt sind.

5. Schaltschrank nach einem der Ansprüche 1 bis 4,
dadurch gekennzeichnet,
daß das Einbaugehäuse (30) bis auf die Vorderseite HF-dicht geschlossen ist.

6. Schaltschrank nach einem der Ansprüche 1 bis 4,
dadurch gekennzeichnet,
daß das Einbaurahmengestell wie das Rahmengestell mit Reihen von Befestigungsaufnahmen (33) und/oder Befestigungsbohrungen (27) versehen ist.

7. Schaltschrank nach Anspruch 5,
dadurch gekennzeichnet,
daß das Einbaugehäuse (30) zumindest im Bereich der Vorderseite rahmenartig abgekantet und mit Reihen von Befestigungsaufnahmen (33) versehen ist.

8. Schaltschrank nach einen der Ansprüche 1 bis 7,
dadurch gekennzeichnet,
daß das Rahmengestell (10) über einen plattenförmigen Dämpfungsrahmen federnd auf einem mit der Standfläche verbindbaren Sockel verbunden ist.

## Claims

1. Switchgear cabinet, having a framework which comprises frame members and is closed or closable by means of wall elements and at least one cabinet door, characterised in that at least one built-in housing (30) or built-in framework, is incorporated in the framework (10) and, in the lower region, is resiliently mounted on horizontal supporting bars (31) by means of vertically orientated damping buffers (35.1), said bars being provided between the lateral, vertical frame members (11), and in that the upper region of the built-in housing (30) or built-in framework is resiliently connected to the vertical frame members (11) of the framework (10) by means of horizontally orientated damping buffers (35.2) directly or via securing brackets (21).

2. Switchgear cabinet according to claim 1, characterised in that the built-in housing (30) or built-in framework is connected, in the lower region, to the horizontal supporting bars (31) via four damping buffers (35.1), which are disposed in the corner regions of the underside.

3. Switchgear cabinet according to claim 1 or 2, characterised in that the front and rear sides of the built-in housing (30) or built-in framework are each connected, in the upper region, to the facing, vertical frame members (11) via two damping buffers (35.2), which are situated perpendicular to these sides.

4. Switchgear cabinet according to one of claims 1 to 3, characterised in that the damping buffers (35.1, 35.2) have a cylindrical configuration, and in that threaded bushes for securing screws (22,34, 37,43) are inserted in the end faces of the damping buffers (35.1, 35.2).

5. Switchgear cabinet according to one of claims 1 to 4, characterised in that the built-in housing (30) is closed in an HF-tight manner, except for the front side.

6. Switchgear cabinet according to one of claims 1 to 4, characterised in that the built-in framework, like the framework, is provided with rows of securing receivers (33) and/or securing bores (27).

7. Switchgear cabinet according to claim 5, characterised in that the built-in housing (30) is bent-over in a frame-like manner, at least in the region of the front side, and is provided with rows of securing receivers (33).

8. Switchgear cabinet according to one of claims 1 to 7, characterised in that the framework (10) is connected resiliently on a base, which is connectable to the supporting face, via a plate-like damping frame.

## Revendications

1. Armoire de distribution avec un châssis ou une ossature d'encadrement composé de branches d'encadrement, châssis ou ossature d'encadrement qui est fermé ou qui peut être fermé au moyen d'éléments de paroi et d'au moins une porte d'armoire,
caractérisée en ce que dans le châssis (10) est monté au moins un boîtier ou une ossature d'insertion (30), boîtier qui dans la zone inférieure est au moyen de tampons amortisseurs (35.1) orientés verticalement est fixé élastiquement sur des rails de support horizontaux (31) disposés entre les branches d'encadrement verticales latérales, et
en ce que la zone supérieure du boîtier ou de l'ossature d'insertion (30) est au moyen de tampons amortisseurs (35.2) orientés horizontalement relié élastiquement, directement ou par l'intermédiaire de cornières de fixation (21), aux branches d'encadrement verticales (11) du châssis ou de l'ossature (10).

2. Armoire de distribution suivant la revendication 1, caractérisée
en ce que dans la zone inférieure, le boîtier ou l'ossature d'insertion (30) est par l'intermédiaire de quatre tampons amortisseurs (35.1) disposés aux angles de la face inférieure relié aux rails de support horizontaux (31).

3. Armoire de distribution suivant la revendication 1 ou 2,
caractérisée en ce que dans la zone supérieure, le côté avant et le côté arrière du boîtier ou de l'ossature d'insertion (30) sont, par l'intermédiaire de chaque fois deux tampons amortisseurs (35.2) perpendiculaires à ces côtés, reliés aux branches d'encadrement verticales (11) qui leur font face.

4. Armoire de distribution suivant l'une quelconque des revendications de 1 à 3,
caractérisée
en ce que les tampons amortisseurs (35.1, 35.2) sont de forme cylindrique et en ce que les faces frontales des tampons amortisseurs (35.1, 35.2) présentent des douilles filetées à l'intention de vis de fixation (22, 34, 37, 43).

5. Armoire de distribution suivant l'une quelconque des revendications de 1 à 4,
caractérisée
en ce que du côté avant, le boîtier d'insertion est hermétique aux hautes fréquences.

6. Armoire de distribution suivant l'une quelconque des revendications de 1 à 4,
caractérisée
en ce que tout comme le châssis ou l'ossature d'encadrement, le boîtier d'insertion présente des rangées de logements de fixation (33) et/ou de forures de fixation (27).

7. Armoire de distribution suivant la revendication 5,
caractérisée
en ce que au moins dans la zone de la face avant, le boîtier d'insertion (30) est cintré en forme de cadre et présente des rangées de logements de fixation (33).

8. Armoire de distribution suivant l'une quelconque des revendications de 1 à 7,
caractérisée
en ce que le châssis ou l'ossature d'encadrement (10) est par l'intermédiaire d'un cadre amortisseur en forme de plaque relié élastiquement à un socle pouvant être fixé à la surface d'implantation.
